# EUROPÄISCHE PATENTSCHRIFT

(11) **EP 0 499 820 B1**
(45) Veröffentlichungstag und Bekanntmachung des Hinweises auf die Patenterteilung: **07.09.1994**
(21) Anmeldenummer: 92101108.6
(22) Anmeldetag: 24.01.1992
(51) Int. Cl.: B23B 5/40

(54) **Kugelausbohrwerkzeug**
Boring tool for spherical surfaces
Outil d'alesage pour surfaces sphériques

(30) Priorität: 14.02.1991 DE 4104474
(43) Veröffentlichungstag der Anmeldung: 26.08.1992
(73) Patentinhaber: GIDDINGS & LEWIS GmbH, D-73240 Wendlingen (DE)
(72) Erfinder: Baudermann, Adolf, W-7440 Nürtingen 7 (DE)
(74) Vertreter: Rüger, Rudolf, Dr.-Ing.

(56) Entgegenhaltungen:
- EP-A- 0 223 152
- DE-C- 3 042 400

## Beschreibung

Die Erfindung betrifft eine Einrichtung zum Ausbohren von kugelig gekrümmten Werkstückinnenflächen, mit den Merkmalen des Oberbegriffs des Anspruches 1.

Aus der DE-A-30 42 400 ist eine gattungsgemäße Einrichtung bekannt. Diese weist in dem Grundkörper eine schlitzförmige Durchgangsöffnung auf, in der das Schwenkgehäuse auf einer rohrförmigen Achse schwenkbar gelagert ist. Die rohrförmige Achse liegt rechtwinklig zu der Rotationsachse der Bohreinrichtung, damit das an dem Schwenkgehäuse befestigte Schneidwerkzeug während der Rotation des Bohrwerkzeugs die gesamte zu bearbeitende Kugelfläche überstreichen kann. Um Schneidentoleranzen ausgleichen zu können, damit immer derselbe Werkstückinnendurchmesser erzeugt wird, ist ein Keilgetriebe vorgesehen. Dieses umfaßt einen in der rohrförmigen Achse längsverschieblichen Keil, an dem ein Stößel anliegt, der rechtwinklig zu der Achse verschiebbar ist. Der Stößel stellt das Verbindungsglied zwischen dem Keil und dem Schneidwerkzeughalter dar, der an der Außenseite des Schwenkgehäuses festgeschraubt ist und einen federnden Arm aufweist, an dem das eigentliche Schneidwerkzeug gehaltert ist. Durch Verschieben des Keils in der Achse wird der Stößel mehr oder weniger radial nach außen geschoben, um den Flugkreisdurchmesser des Schneidwerkzeugs, bezogen auf die Achse, einstellen zu können.

Die Betätigung des Keils geschieht durch ein weiteres Keilgetriebe, das mit einer Betätigungsstange verbunden ist, die durch den Schaft des Bohrwerkzeuges hindurchführt. Da zusätzlich zu dieser Betätigungsstange durch den Schaft des Bohrwerkzeugs noch die Betätigungsstange zum Verschwenken des Schwenkgehäuses hindurchführt, kann das bekannte Bohrwerkzeug nicht ohne weiteres von der Arbeitsspindel abgekuppelt werden. Es eignet sich deswegen nicht für Werkzeugmaschinen, bei denen ein Werkzeugwechsel vorgesehen ist.

Die Möglichkeit des bekannten Ausbohrwerkzeugs, die Schneidenverstellung durch eine Betätigungsstange im Inneren der Werkzeugspindel vorzunehmen, stellt bei den heutigen Transferstraßen keinen Vorteil mehr dar. Zur Vermessung der Schneidenlage muß das Werkzeug ohnehin in eine definierte Drehlage gebracht werden.

Eine weitere Beschränkung ergibt sich aus der federnden Anbringung des das eigentliche Schneidwerkzeug tragenden Armes. Das Federgelenk muß als Kompromiß dimensioniert werden. Im Sinne einer möglichst robusten Halterung des Schneidwerkzeuges sollte das Federgelenk so steif wie nur irgend möglich sein. Dann treten aber Probleme bei der Verstellung auf, denn es werden hierzu übermäßig große Kräfte benötigt. Der Konstrukteur macht deswegen das federnde Gelenk gerade eben nur so kräftig, daß es in der Lage ist, die bei der normalen Schneidoperation auftretenden Kräfte auszuhalten.

Im Falle eines Schneidenbruchs kann der Schneidwerkzeughalter beschädigt werden und muß ausgewechselt werden, was nicht nur eine entsprechende Stillstandszeit der Maschine bedeutet, sondern auch erhebliche Kosten für einen neuen Schneidwerkzeughalter, der eine verhältnismäßig komplizierte Form hat und entsprechend teuer in der Herstellung ist.

Ausgehend hiervon ist es Aufgabe der Erfindung, eine Einrichtung zum Ausbohren von kugelig gekrümmten Werkstückinnenflächen zu schaffen, die einen einfacheren und robusteren Aufbau aufweist und leicht wechselbar ist.

Diese Aufgabe wird erfindungsgemäß durch die Einrichtung mit den Merkmalen des Anspruches 1 gelöst.

Die Anbringung der Keilfläche auf dem Achsbolzen macht ein getrenntes Teil entbehrlich und gestattet es außerdem, die Keilfläche größer zu gestalten, so daß höhere Kräfte übertragen werden können. Da der Achsbolzen, auf dem die Keilfläche angebracht ist, naturgemäß einen größeren Durchmesser aufweist als der Keilstift, der bei den bekannten Einrichtungen im Inneren des Achsbolzens gelagert ist, ist auch ein größerer Verstellhub möglich. Ferner vermindert sich hierdurch die Anzahl der notwendigen Teile.

Besonders platzsparend wird die Anordnung, wenn die Betätigungseinrichtung zum Verschieben des die Keilfläche tragenden Achsbolzens in dem Achsbolzen selbst untergebracht ist.

Die an dem Achsbolzen vorgesehene Keilfläche verhindert im Zusammenwirken mit den Schnittkräften an sich ohnehin ein Drehen des Achsbolzens in dem Schwenkgehäuse. Um die Genauigkeit zu steigern, kann es jedoch von Vorteil sein, eine zusätzliche Verdrehsicherung anzubringen, was obendrein den Vorteil hat, daß der Achsbolzen in der richtigen Lage bleibt, selbst dann, wenn keine Schnittkräfte auftreten. Die Drehsicherung für den Achsbolzen besteht im einfachsten Falle in dem Schneidwerkzeughalter selbst, wozu der Achsbolzen eine rechtwinklig zu seiner Längsachse verlaufende Durchgangsöffnung aufweist, durch die ein Schaftteil des Schneidwerkzeughalters hindurchführt.

Ein besonders robuster Schneidwerkzeughalter ergibt sich, wenn er nach Art eines Plungerkolbens ausgebildet ist und in einer Bohrung des Schwenkgehäuses sitzt. Auf diese Weise kann er einerseits mit geringen Kräften verstellt werden, ist aber andererseits in der Lage, sehr hohe Reaktionskräfte aufzunehmen. Selbst wenn infolge eines Schneidenbruchs Beschädigungen auftreten sollten, beispielsweise weil die Aufnahmetasche für den Schneidplatteneinsatz verdrückt ist, kann der Schneidwerkzeughalter leicht ausgewechselt werden. Außerdem hat er eine verhältnismäßig einfache Form und braucht nicht aus einem Material zu bestehen, das federnde Eigenschaften hat. Auch die Schulterflächen des Schneidwerkzeughalters, die mit der Keilfläche an dem Achsbolzen zusammenwirken, lassen sich auf einfache Weise fertigen.

Wenn die Durchgangsöffnung in dem Achsbolzen als Langloch ausgebildet ist und der Schaftteil des Schneidwerkzeughalters im Bereich dieser Durchgangsöffnung ebenfalls flachkantig ist, ergibt sich auf einfache Weise eine Sicherung für den Schneidwerkzeughalter gegenüber einer Drehbewegung. Dabei lassen sich die Momente um die Längsachse des Schneidwerkzeughalters besonders klein halten, wenn die Schneide auf der Längsachse liegt.

Das Kippmoment, das infolge der Schnittkraft auf den Schneidwerkzeughalter wirkt, läßt sich am einfachsten mit Hilfe eines runden Zapfens aufnehmen, der an dem Schneidwerkzeughalter ausgebildet ist und in einer passenden zylindrischen Bohrung des Schwenkgehäuses längsverschieblich geführt ist.

Besonders einfach wird der Schneidwerkzeughalter, wenn er mit Ausnahme des durch den Achsbolzen laufenden Schaftteils im übrigen zylindrisch, gegebenenfalls mit unterschiedlichen Durchmessern ist.

Im übrigen sind Weiterbildungen der Erfindung Gegenstand von Unteransprüchen.

In der Zeichnung ist ein Ausführungsbeispiel des Gegenstandes der Erfindung dargestellt. Es zeigen:
- Fig. 1: eine Vorrichtung zum Ausbohren von kugeligen Innenflächen an Werkstücken, in einer Seitenansicht,
- Fig. 2: die Einrichtung nach Fig. 1 in einem Längsschnitt entlang der Linie II-II nach Fig. 3,
- Fig. 3: die Einrichtung aus Fig. 1 in einem Querschnitt entlang der Linie III-III aus Fig. 1,

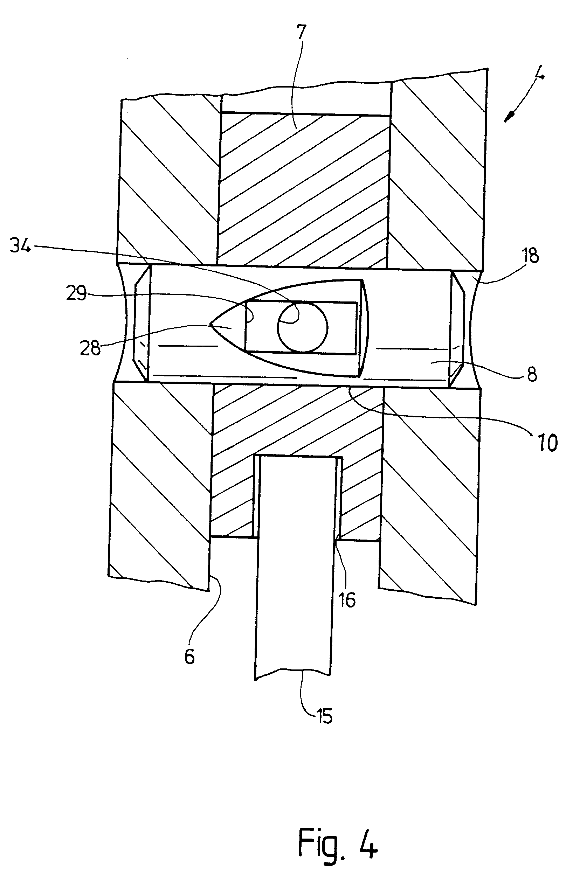

- Fig. 4: einen Ausschnitt der Einrichtung nach Fig. 1 geschnitten entlang der Linie IV-IV nach Fig. 3, ohne Schneideinsatzhalter, und
- Fig. 5: den Achsbolzen, den Schneideinsatzhalter sowie die Einstellschraube der Einrichtung nach Fig. 1 in einer perspektivischen Explosionsdarstellung.

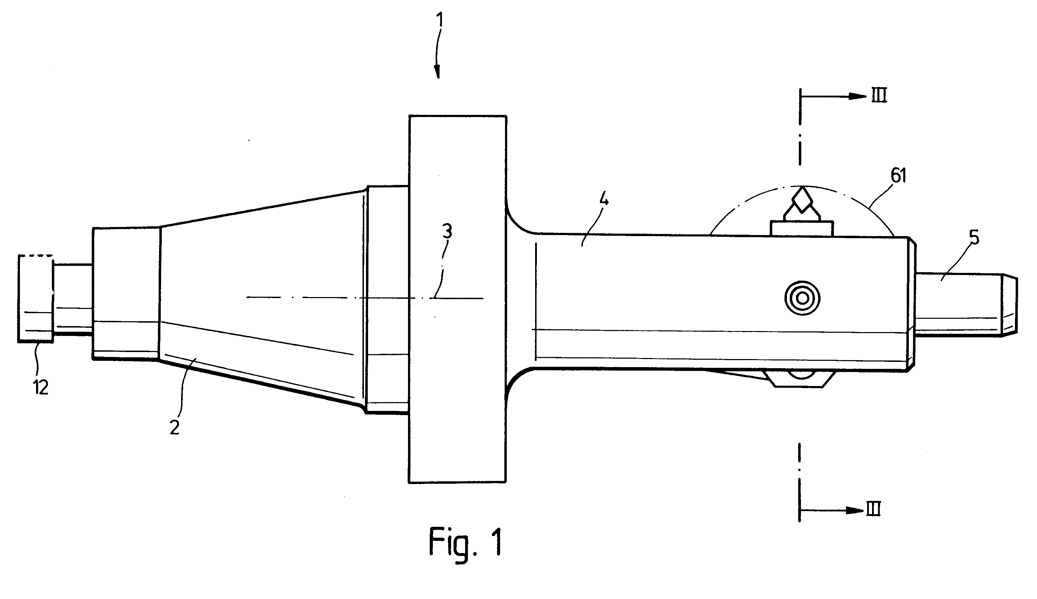

Fig. 1 zeigt in einer Seitenansicht eine Einrichtung 1 die dazu dient, kugelige Innenflächen an Werkstücken auszubohren oder auszudrehen. Die Einrichtung 1 wird hierzu mit ihrem an der Rückseite vorgesehenen kegeligen Ende 2 in einer Werkzeugmaschinenspindel aufgenommen und bezüglich ihrer Längs- oder Rotationsachse 3 in Umdrehungen versetzt. Ihr vorderes, dem Werkstück zugekehrtes Ende bildet einen zylindrischen Grundkörper 4, der zu der Rotationsachse 3 konzentrisch ist und in einem zylindrischen Zapfen 5 endet, der während des Ausbohrvorganges in einem in der Maschine stationären Widerlager steckt, um zusätzlich Querkräfte aufzunehmen. In der Nähe des zylindrischen Zapfens 5 ist in dem Grundkörper 4 ein quer zu der Rotationsachse 3 sich erstreckender durchgehender Schlitz 6 ausgebildet, in dem ein Schwenkgehäuse 7 auf einem Achsbolzen 8 schwenkbar gelagert ist; er sitzt in einer Bohrung 10 des Schwenkgehäuses 7, das die Gestalt einer sechseckigen Platte aufweist. Die Längsachse des Bolzens 8 schneidet rechtwinklig die Rotationsachse 3.

Der Grundkörper 4 ist mit einer durchgehenden Längsbohrung 9 versehen, die bis zu dem Aufnahmeschlitz 6 reicht und in der eine Betätigungsstange 11 längsverschieblich geführt ist, deren rückwärtiges Ende bei 12 aus der Einrichtung 1 herausragt. Die Betätigungsstange 11 ist an ihrem vorderen, dem Schwenkgehäuse 7 benachbarten Ende 13 gegabelt und mit einer Querbohrung versehen, in der ein Lagerbolzen 14 steckt. Auf dem Lagerbolzen 14 ist ein Pleuel 15 einenends schwenkbar gelagert, das andernends schwenkbar mit dem Schwenkgehäuse 7 verbunden ist. Das Schwenkgehäuse 7 ist zu diesem Zweck an seiner entsprechenden Seite mit einem Schlitz 16 versehen, so daß ebenfalls eine Gabelung entsteht, in der die Pleuelstange 15 mit dem anderen Ende angeordnet ist. Quer durch das Schwenkgehäuse 7 führt im Bereich des Schlitzes 16 ein Lagerbolzen 17, der außerdem durch eine entsprechende Bohrung in dem Pleuel 15 hindurchgeht, so daß das Pleuel 15 über den Bolzen 17 an dem Schwenkgehäuse 7 angelenkt ist.

Wenn die Betätigungsstange 12, die zu der Rotationsachse koaxial ist, in dem Grundkörper 4 in Längsrichtung verschoben wird, erzeugt sie mit Hilfe des Pleuels 15 eine Drehbewegung des Schwenkgehäuses 7 um die Achse des Achsbolzens 8.

Der Achsbolzen 8 steckt beidends in einer Durchgangsbohrung 18, die durch den Grundkörper 4 im Bereich des Aufnahmeschlitzes 6 rechtwinklig zu diesem hindurch führt. Die Achse der Durchgangsbohrung 18 schneidet rechtwinklig die Rotationsachse 3 und steht damit auf den Seitenwänden des Aufnahmeschlitzes 6 senkrecht. Der Achsbolzen 8 ist in der Durchgangsbohrung 18 sowohl drehbar als auch längsverschieblich spielfrei geführt.

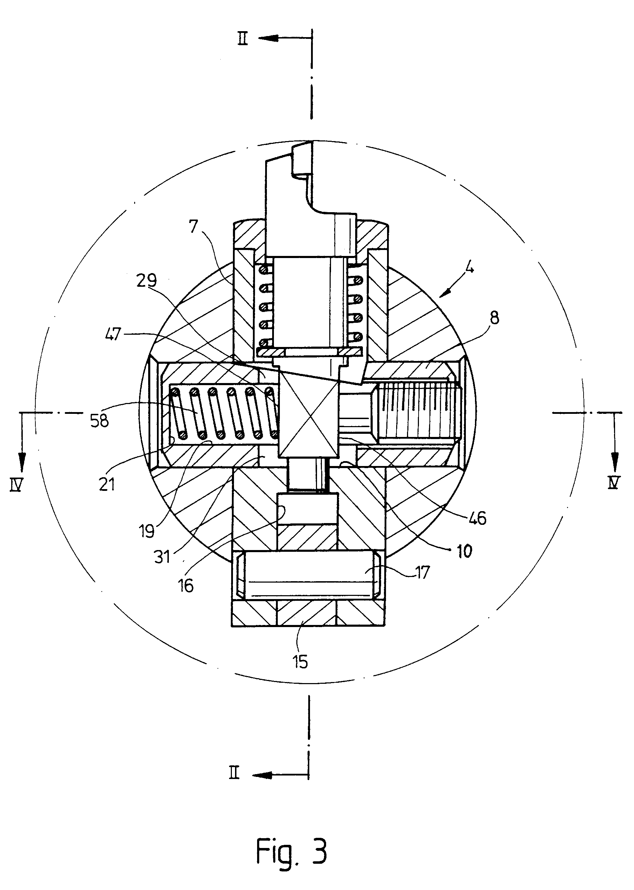

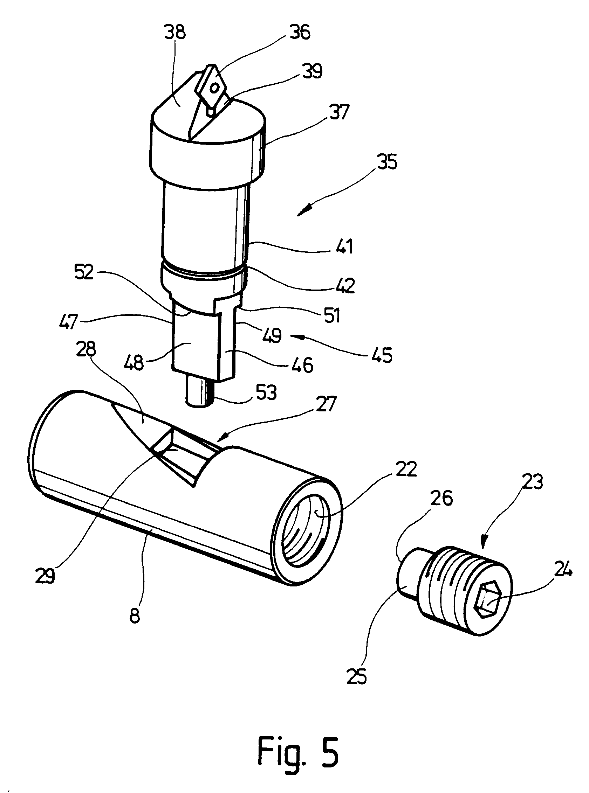

Seine Gestalt ist am besten in den Fig. 3 und 5 zu erkennen. Der Achsbolzen 8 ist ein zylindrischer Bolzen mit über seine Länge konstantem Durchmesser. Er enthält eine zu seiner zylindrischen Außenfläche konzentrische Sackbohrung 19, die an einem Boden 21 stumpf endet. Am anderen Ende ist die Sackbohrung 19 mit einem Innengewinde 22 versehen, in die eine Einstellschraube 23 eindrehbar ist. Die Einstellschraube 23 ist eine Stiftschraube, die einenends einen Innensechskant 24 zum Ansatz eines entsprechenden Werkzeugs und andernends einen zylindrischen Zapfen 25 mit einer planen Stirnfläche 26 aufweist.

Der Achsbolzen 8 trägt in seiner Umfangsfläche einen Einschnitt 27 nach Art einer Orgelpfeife, womit sich eine zu der Längsachse des Achsbolzens 8 schräg verlaufende Fläche 28 ergibt, die als Keilfläche dient und unter einem Winkel von ca. 8° gegen die Achse des Achsbolzens 8 geneigt ist. Die Keilfläche 28 liegt etwa in der Mitte des Achsbolzens 8 und ist eine ebene Fläche. Ihre Dimensionierung ergibt sich aus der unten gegebenen Funktionsbeschreibung.

In der Mitte der Keilfläche 28 enthält der Achsbolzen 8 eine rechteckige Durchgangsöffnung 29, die bis in die zylindrische Sackbohrung 19 hineinreicht. Mit der rechteckigen Durchgangsöffnung 29 fluchtet an der diametral gegenüberliegenden Seite eine weitere rechteckige Durchgangsöffnung 31 mit denselben Abmessungen.

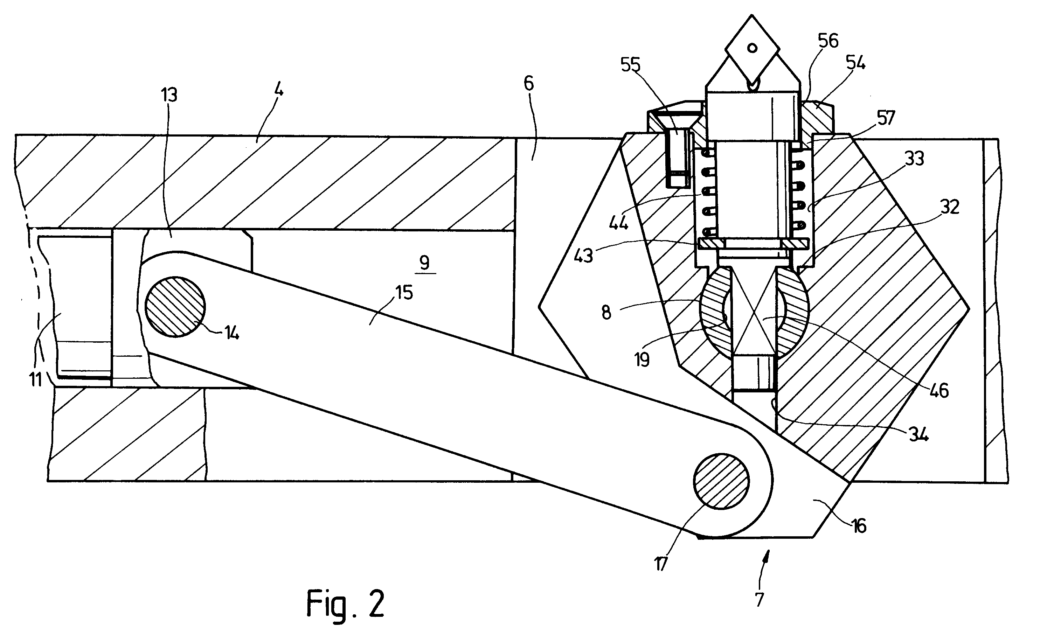

Rechtwinklig zu dem Achsbolzen 8 verlaufend ist das Schwenkgehäuse 7 mit einer Stufenbohrung 32 versehen, die, bezogen auf die Darstellung in Fig. 2, oberhalb des Achsbolzens 8 einen zylindrischen Abschnitt 33 mit einem Durchmesser größer als dem Außendurchmesser des Achsbolzens 8 und unterhalb des Achsbolzens 8 einen zylindrischen Abschnitt 34 aufweist, dessen Durchmesser kleiner oder gleich der Quererstreckung der beiden vierkantigen Öffnungen 29 bzw. 31 ist. Die Achse der Stufenbohrung 32 schneidet die Achse des Achsbolzens 8 rechtwinklig, d.h. die Stufenbohrung 32 fluchtet mit den beiden vierkantigen Öffnungen 29 und 31.

In der Stufenbohrung 32 sitzt längsverschieblich ein Schneidwerkzeughalter 35, der an einem seiner Enden in einer entsprechenden Aufnahmetasche einen Schneideinsatz 36 in Gestalt einer Rombusplatte trägt. Der Schneidwerkzeughalter 35 besteht aus einem zylindrischen Abschnitt 37, an dessen einer Stirnseite ein Fortsatz 38 ausgebildet ist, der die Gestalt eines halbierten Kegelstumpfes hat, wobei die durch die Halbierung entstehende Fläche 39 etwa auf der Achse des zylindrischen Abschnittes 37 liegt. In dieser Fläche bzw. in dem Fortsatz 38 ist die Tasche für den rombusförmigen Schneideinsatz 36 eingearbeitet, die mit Hilfe einer nicht weiter gezeigten Klemmschraube befestigt ist. An der gegenüberliegenden Stirnseite geht der zylindrische Abschnitt 37 in einen weiteren zylindrischen Abschnitt 41 mit kleinerem Durchmesser über, der zu dem Abschnitt 37 koaxial ist. An einer im Abstand von dem Abschnitt 37 liegenden Stelle enthält der Abschnitt 41 eine umlaufende Ringnut 42 für einen darin sitzenden Sprengring 43 (siehe Fig. 2), der als Widerlager für eine als Schraubenfeder ausgebildete Druckfeder 44 wirkt.

Bezogen auf die Darstellung in Fig. 5 geht nach einem kurzen zylindrischen Stück unterhalb der Ringnut 42 der Abschnitt 41 in einen etwa flachkantigen Schaftteil 45 über. Der Schaftteil 45 ist von zwei bezüglich der Längsachse des Schneidwerkzeughalters 35 diametral liegenden und zueinander parallelen Flächen 46 und 47 begrenzt, die bis knapp unterhalb der Ringnut 42 reichen. Zwischen diesen beiden Flächen 46 und 47 erstrecken sich zwei weitere, ebenfalls bezüglich der Längsachse des Schneidwerkzeughalters 35 diametral liegende Flachseiten 48 und 49, so daß der Schaftteil 45 insgesamt einen rechteckigen Querschnitt hat, wobei der Abstand der Flachseiten 48 und 49 der Breite der beiden Öffnungen 29 und 31 in dem Achsbolzen 8 entspricht, während der Abstand der schmalen Seiten 46 und 47 voneinander kleiner ist als die Länge der Durchgangsöffnungen 29 und 31. Der Schaftteil 45 ist deswegen in den Durchgangsöffnungen 29 und 31 parallel zu der Längsachse des Achsbolzens 8 verschiebbar, kann jedoch in dem Achsbolzen 8 nicht um die Längsachse des Achsbolzens 8 kippen. Außerdem ergibt sich aufgrund des im Querschnitt rechteckigen Schaftteils 45 eine Sicherung des Schneidwerkzeughalters 35 gegenüber Drehungen bezüglich seiner Längsachse, damit die Spanfläche des Schneideinsatzes 36 immer in Richtung parallel zu dem Achsbolzen 8 steht.

An dem Übergang von dem zylindrischen Abschnitt 41 in den Schaftteil 45 befinden sich zwei radial nach außen springende Schultern 51 und 52, die an ihrem radial innen liegenden Ende in die Flachseiten 48, 49 übergehen und an ihrem radial außen liegenden Ende von der Zylinderfläche des zylindrischen Abschnittes 41 begrenzt sind. Die beiden Schultern 51 und 52 liegen in einer gemeinsamen Ebene, die gegenüber der Längsachse des Schneidwerkzeughalters 35 um den Ergänzungswinkel auf 90^{o} des Winkels geneigt ist, den die Keilfläche 28 mit der Längsachse des Achsbolzens 8 einschließt.

Am unteren Ende des Schaftteiles 45 befindet sich schließlich ein zu dem Abschnitt 37 bzw. dem Abschnitt 41 konzentrischer zylindrischer Zapfen 53, der in seinem Durchmesser mit der Bohrung 34 in dem Schwenkgehäuse 7 übereinstimmt.

Der solchermaßen gestaltete Schneidwerkzeughalter 35 steckt in der Stufenbohrung 32 des Schwenkgehäuses 7, wobei sein im Querschnitt rechteckiger Schaftteil 45 durch die Durchgangsöffnung 29 hindurchführt und noch ein Stück weit in der ebenfalls rechteckigen Öffnung 31 steckt. Der zylindrische Zapfen 53 führt aus der rechteckigen Öffnung 31 des Achsbolzens 8 heraus und sitzt weitgehend spielfrei in der zylindrischen Bohrung 34.

Im montierten Zustand liegen die beiden ebenen Schultern 51 und 52 auf der ebenen Keilfläche 28 vollflächig auf und begrenzen ein weiteres Eindringen des Schneidwerkzeughalters 35 in das Schwenkgehäuse 7.

Der zylindrische Abschnitt 41 begrenzt zusammen mit dem Abschnitt 33 der Stufenbohrung 32 einen zylindrischen Ringraum, in dem die Druckfeder 44 angeordnet ist, die einenends auf dem Sprengring 43 aufliegt. Andernends stützt sich die Druckfeder 44 auf einem Deckel 54 ab, der mittels Befestigungsschrauben 55 an dem Schwenkgehäuse 7 neben der Stufenbohrung 32 festgeschraubt ist. Der Deckel 54 enthält eine zylindrische Bohrung 56, in der spielfrei der zylindrische Abschnitt 37 des Schneidwerkzeughalters 35 geführt ist. Der Deckel 54 ragt mit einem zylindrischen Kragen 57 ein Stück weit in die Stufenbohrung 32 hinein, wobei sich an dem zylindrischen Kragen 57 die Druckfeder 44 abstützt.

Die Funktionsweise der insoweit beschriebenen Einrichtung 1 ist wie folgt: Der Schneidwerkzeugeinsatz 35 ist in dem Schwenkgehäuse 7 spielfrei längsverschieblich geführt, wobei die beim Bohren auftretenden Schnittkräfte einerseits von dem Abschnitt 37 auf den Deckel 54 übertragen werden, der formschlüssig abgestützt in der Stufenbohrung 32 sitzt. Ferner werden die Querkräfte aufgenommen von dem Zapfen 53, der ebenfalls spielfrei in der zylindrischen Bohrung 34 geführt ist. Beide Zylinderflächen zusammen, also sowohl die des Abschnittes 37 als auch die des Zapfens 53 übernehmen auch das Kippmoment, das infolge der Schnittkraft entsteht.

Die in Längsrichtung des Schneidwerkzeughalters 35 wirkende Komponente der Schnittkraft wird über die Schultern 51 und 52 auf die Keilfläche 28 des Achsbolzens 8 übertragen. Der Achsbolzen 8 ist spielfrei in dem Grundkörper 4 gelagert, so daß die Reaktionskraft in den Grundkörper 4 eingeleitet wird und dort auf die Werkzeugspindel bzw. den Zapfen 5 übertragen wird.

Ohne Schnittkraft werden die beiden Schultern 51 und 52 mit Hilfe der Druckfeder 44 in Anlage mit der Keilfläche 28 gehalten.

Die Rotation des Schneidwerkzeughalters 35 infolge der an dem Schneideinsatz 36 angreifenden Schnittkräfte verhindert der im Querschnitt rechteckige Schaftteil 45, der drehfest, jedoch axial verschieblich in den beiden rechteckigen Öffnungen 29 und 31 des Achsbolzens 8 steckt. Außerdem werden die Drehmomente um die Längsachse des Schneidwerkzeughalters 35 dadurch kleingehalten, daß die wirksamen Schneiden der Schneidplatte 36 möglichst dicht an der Längsachse des Schneidwerkzeughalters 35 liegen, die zu den Abschnitten 37 und 41 konzentrisch ist und durch den Schnittpunkt der Diagonalen des rechteckigen Querschnitts des Schaftteils 45 geht.

Die Verstellung des Flugkreisdurchmessers geschieht wie folgt: In der Bohrung 19 des Achsbolzens 8 befindet sich eine Druckfeder 58, die sich an einem Ende an dem Boden 21 abstützt und mit ihrem anderen Ende an der schmalen Fläche 47 des Schaftteils 45 anliegt. Die Druckfeder 58 ist bestrebt, den Achsbolzen 8 in Richtung des Bodens 21 von dem Schneidwerkzeughalter 35 wegzuziehen, dessen Schaftteil 45 die Bohrung 19 durchsetzt. Dadurch gelangen die beiden Schultern 51 und 52 längs der Keilfläche 28 an die tiefstmögliche Stellung, in der sie den kleinsten radialen Abstand von der Achse des Achsbolzens 8 haben, da die Keilfläche 28 zu der Druckfeder hin ansteigt.

Der Druckfeder 58 entgegen wirkt die Einstellschraube 23, die in den Achsbolzen 8 eingeschraubt ist und die sich mit ihrer planen Stirnseite 26 an der Fläche 46 des Schaftteils 45 anlegt. Je nachdem, wie tief die Einstellschraube 23 in den Achsbolzen 8 eingedreht ist, wird dementsprechend der Schaftteil 45 mehr oder weniger weit in Richtung auf die Druckfeder 58 verschoben, was die Schultern 51 und 52 auf der Keilfläche 28, die die Durchgangsöffnung 29 umgibt, radial nach außen bezogen auf den Achsbolzen 8 bewegt. Bei der Verstellung der Einstellschraube 23 bewegt sich der Schaftteil 45 in radialer Richtung durch den Achsbolzen 8, wobei sein Schaftteil 45 in jeder möglichen Stellung sowohl in der Nähe der beiden Schultern 51 und 52 als auch in der Nähe des Zapfens 53 immer zumindest ein Stück weit in den rechteckigen Öffnungen 29 und 31 bleibt.

Da jedoch der Schneidwerkzeughalter 35 in der Stufenbohrung 32 nur längsverschieblich ist, kann die Relativbewegung zwischen dem Schneidwerkzeughalter 35 und dem Achsbolzen 8 nur dadurch zustandekommen, daß bei einer Verstellung der Einstellschraube 23 der Achsbolzen 8 in Längsrichtung in den miteinander fluchtenden Bohrungen 10 und 18 in Längsrichtung hin- und herwandert. Das Schwenkgehäuse 7 kann dieser Bewegung nicht folgen, da es zwischen den planen Seitenwänden des Aufnahmeschlitzes 6 spielfrei geführt ist.

Durch mehr oder weniger tiefes Eindrehen der Einstellschraube 23 kann der Achsbolzen 8 also in dem Schwenkgehäuse 7 bezüglich seiner Längsrichtung verschoben werden, wobei er in der einen Richtung infolge der von der Einstellschraube 23 ausgeübten Druckkraft und in der anderen Richtung infolge der von der Druckfeder 58 ausgeübten Kraft verschoben wird. Die Längsverschiebung des Achsbolzens 8 läßt die beiden Schultern 51 und 52 längs der Keilfläche 28 gleiten, so daß der gewünschte Abstand des Schneideinsatzes 36 von der Achse des Achsbolzens 8 eingestellt werden kann.

Ersichtlicherweise ist der Schneidwerkzeughalter 35 in Richtung des Schnittdrucks allseitig formschlüssig abgestützt,und zwar in dem Deckel 54 sowie in der Bohrung 34 einerseits, als auch mit Hilfe der Schultern 51 und 52 auf der Keilfläche 28 andererseits. Die Druckfeder 44 hat lediglich den Zweck, ohne vorhandenen Schnittdruck die Schultern 51 und 52 mit der Keilfläche 28 in Anlage zu halten; sie wirkt in derselben Richtung wie der Schnittdruck.

Nachdem die Lage des Schneideinsatzes 36 durch Verstellen der Einstellschraube 23 auf den gewünschten Flugkreisdurchmesser justiert ist, kann das Werkzeug eingesetzt werden. Hierzu wird die Betätigungsstange 11 entweder in die linke oder in die rechte Endlage gebracht, wodurch mit Hilfe des Pleuels 15 das Schwenkgehäuse 7, bezogen auf die in Fig. 2 dargestellte Lage, um 45° entweder nach links oder nach rechts geschwenkt ist, bis der Schneideinsatz 36 hinter die Konturen des Grundkörpers 4 zurückgezogen ist. Die an der Werkzeugspindel sitzende Einrichtung 1 kann sodann in das zu bearbeitende Werkstück eingeführt werden, bis der Zapfen 5 in das entsprechende Widerlager eingreift. Sodann wird die Werkzeugspindel mit der daran sitzenden Einrichtung in Umdrehungen versetzt und es wird durch Bewegen der Betätigungsstange 11 aus der einen Endlage in die andere mögliche Endlage das Schwenkgehäuse 7 zusammen mit dem Achsbolzen 8 gedreht, wobei sich die radial am weitesten außen liegende Schneidecke des Schneideinsatzes 36 längs einem Kreisbogen 61 bewegt.

Die Justage der Schneide kann sowohl von Hand als auch automatisch erfolgen.

## Patentansprüche

1. Einrichtung (1) zum Ausbohren von kugelig gekrümmten Werkstückinnenflächen, mit einem eine Rotationsache (3) aufweisenden Grundkörper (4), einem in dem Grundkörper (4) schwenkbar gelagerten Schwenkgehäuse (7), einem in dem Grundkörper (4) gelagerten Achsbolzen (8), dessen Längsachse rechtwinklig zu der Rotationsachse (3) ist und der durch das Schwenkgehäuse (7) hindurchführt, um das Schwenkgehäuse (7) zu lagern, das mittels einer in dem Grundkörper (4) angeordneten Gestänges (11, 15) zu schwenken ist, mit einem von dem Schwenkgehäuse (7) getragenen Schneidwerkzeughalter (35), der radial bezüglich des Achsbolzens (8) verstellbar ist und in Richtung auf den Achsbolzen (8) elastisch vorgespannt ist, und mit einem auf der Längsachse des Achsbolzens (8) verschiebbaren, eine Keilfläche (28) tragenden Glied, das mit dem Schneidwerkzeughalter (35) zusammenwirkt und durch das der Schneidwerkzeughalter (35) radial bezüglich des Achsbolzens (8) gegen die elastische Vorspannung verstellbar ist, sowie mit einer Betätigungseinrichtung (23) zum Verstellen des die Keilfläche (28) tragenden Gliedes gegen die Wirkung einer dem Glied zugeordneten Vorspanneinrichtung (58), dadurch gekennzeichnet, daß der Achsbolzen (8) in dem Grundkörper (4) sowie dem Schwenkgehäuse (7) längsverschieblich gelagert ist, daß der Achsbolzen (8) in dem Schwenkgehäuse (7) drehfest angeordnet ist und daß der Achsbolzen (8) die Keilfläche (28) trägt.

2. Einrichtung nach Anspruch 1, dadurch gekennzeichnet, daß der Achsbolzen (8) rohrförmig ausgebildet ist und daß die Betätigungseinrichtung (23) zum Verschieben des Achsbolzens (8) in dem Achsbolzen (8) untergebracht ist.

3. Einrichtung nach Anspruch 1, dadurch gekennzeichnet, daß der Schneidwerkzeughalter (35) den Achsbolzen (8) in dem Schwenkgehäuse (7) drehfest festlegt.

4. Einrichtung nach Anspruch 1, dadurch gekennzeichnet, daß der Achsbolzen (8) eine Durchgangsöffnung (29, 31) enthält, die die Längsachse des Achsbolzens (8) schneidet und an diametral gegenüberliegenden Stellen des Achsbolzens (8) austritt.

5. Einrichtung nach Anspruch 4, dadurch gekennzeichnet, daß die Durchgangsöffnung (29) durch die Keilfläche (28) hindurchtritt.

6. Einrichtung nach Anspruch 1, dadurch gekennzeichnet, daß die Keilfläche (28) etwa mittig auf dem Achsbolzen (8) angeordnet ist.

7. Einrichtung nach Anspruch 1, dadurch gekennzeichnet, daß die von der Keilfläche (28) definierte Ebene die Längsachse des Achsbolzens (8) schneidet.

8. Einrichtung nach Anspruch 1, dadurch gekennzeichnet, daß das Schwenkgehäuse (7) eine Bohrung (32) enthält, in der der Schneidwerkzeughalter (35) längsverschieblich angeordnet ist.

9. Einrichtung nach Anspruch 8, dadurch gekennzeichnet, daß die Bohrung (32) für den Schneidwerkzeughalter (35) die Bohrung (10) für den Achsbolzen (8) schneidet.

10. Einrichtung nach Anspruch 4, dadurch gekennzeichnet, daß der Schneidwerkzeughalter (35) einen durch die Durchgangsöffnung (29, 31) des Achsbolzens (8) hindurchführenden Schaftteil (45) aufweist, der an dem der Keilfläche (28) des Achsbolzens (8) benachbarten Ende mit einer zu der Keilfläche (28) des Achsbolzens (8) komplementären Schulterfläche (51, 52) versehen ist.

11. Einrichtung nach Anspruch 10, dadurch gekennzeichnet, daß der Schaftteil (45) im Querschnitt rechtwinklig zu der Längsachse des Schneidwerkzeughalters (35) flachkantig ist und daß die Durchgangsöffnung (29, 31) in dem Achsbolzen (8) ein Langloch ist, dessen längere Abmessung parallel zu der Längsachse des Achsbolzens (8) liegt und dessen Quererstreckung gleich der Dicke des Flachkantes ist.

12. Einrichtung nach Anspruch 10, dadurch gekennzeichnet, daß die Länge des Schaftteiles (45), gemessen in der Längsrichtung des Schneidwerkzeughalters (35), kleiner ist als der Außendurchmesser des Achsbolzens (8).

13. Einrichtung nach Anspruch 10, dadurch gekennzeichnet, daß der Schaftteil (45) des Schneidwerkzeughalters (35) an seinem von dem Schneidwerkzeug (36) abliegenden Ende einen Zapfen (53) trägt, der nicht über den Querschnitt des Schaftteils (45) übersteht und in einer entsprechenden Öffnung (34) des Schwenkgehäuses (7) auf der dem Schneidwerkzeug (36) gegenüberliegenden Seite des Achsbolzens (8) geführt ist.

14. Einrichtung nach Anspruch 13, dadurch gekennzeichnet, daß der Zapfen (53) ein zylindrischer Zapfen ist und die zugehörige Öffnung (34) in dem Schwenkgehäuse (7) eine zylindrische Bohrung.

15. Einrichtung nach Anspruch 10, dadurch gekennzeichnet, daß der Schneidwerkzeughalter (35) im Bereich zwischen der mit der Keilfläche (28) zusammenwirkenden Schulter (51, 52) und dem Schneidwerkzeug (36) einen zylindrischen Abschnitt (41) aufweist, dessen Querschnitt quer zu der Längsachse des Schneidwerkzeughalters (35) gleich oder größer ist als der Schaftteil (45).

16. Einrichtung nach Anspruch 15, dadurch gekennzeichnet, daß der zylindrische Abschnitt (41) an seinem von dem Schaftteil (45) abliegenden Ende in einen Bund (37) mit weiter vergrößertem Querschnitt übergeht.

17. Einrichtung nach Anspruch 15, dadurch gekennzeichnet, daß der zylindrische Abschnitt (41) des Schneidwerkzeughalters (35) ein Widerlager (43) für eine Druckfeder (44) trägt, die sich andernends an dem Schwenkgehäuse (7) abstützt und die den Schneidwerkzeughalter (35) in Richtung auf die Keilfläche (28) des Achsbolzens (8) zu vorspannt.

18. Einrichtung nach Anspruch 17, dadurch gekennzeichnet, daß die Druckfeder eine Schraubenfeder (44) ist.

19. Einrichtung nach Anspruch 17, dadurch gekennzeichnet, daß zum Abstützen der Druckfeder (44) in dem Schwenkgehäuse (7) ein an dem Schwenkgehäuse (7) befestigter Deckel (54) vorhanden ist, der eine Öffnung (56) zum Durchtritt des Schneidwerkzeughalters (35) aufweist und daß der Schneidwerkzeughalter (35) in der Öffnung (56) des Deckels (54) in radialer Richtung geführt ist.

20. Einrichtung nach Anspruch 2, dadurch gekennzeichnet, daß der rohrförmige Achsbolzen (8) an einem Ende verschlossen ist und die Betätigungseinrichtung eine Druckfeder (58) sowie eine Betätigungsschraube (23) umfaßt, daß die Druckfeder (58) zwischen dem verschlossenen Ende des Achsbolzens (8) und dem Schneidwerkzeughalter (35) angeordnet ist und daß die Druckschraube (23) in einem in dem Achsbolzen (8) befindlichen Innengewinde (22) an dem der Feder (58) gegenüberliegenden Ende eingeschraubt ist, die sich an dem Schneidwerkzeughalter (35) abstützt, derart, daß der Schneidwerkzeughalter (35) beim Eindrehen der Schraube (23) in Richtung des Schneidwerkzeuges (36) radial bezüglich des Achsbolzens (8) verschoben wird.

21. Einrichtung nach Anspruch 1, dadurch gekennzeichnet, daß das Schneidwerkzeug (36) mit seiner wirksamen Schneide auf einer Ebene liegt, die die Längsachse des Schneidwerkzeughalters (35) enthält.

## Claims

1. Device (1) for boring spherically curved inside surfaces on workpieces comprising a main body (4) having an axis of rotation (3), a swivel housing (7) mounted for swivel motion in the main body (4), an axial bolt (8) mounted in the main body (4), the longitudinal axis of said axial bolt (8) being at right angles to the axis of rotation (3) and the axial bolt (8) being guided through the swivel housing (7) to mount the swivel housing (7) which is swivelled by an arrangement of rods (11, 15) arranged in the main body (4), a cutting tool holder (35) carried by the swivel housing (7), said cutting tool holder (35) being radially adjustable relative to the axial bolt (8) and elastically prestressed in the direction of the axial bolt (8), and a member displaceable on the longitudinal axis of the axial bolt (8) and carrying a wedge surface (28), said member cooperating with the cutting tool holder (35) for radial adjustment of the cutting tool holder (35) by the said member relative to the axial bolt (8) against the elastic prestressing, and an actuating device (23) for adjusting the member carrying the wedge surface (28) against the action of a prestressing device (58) associated with the member, characterized in that the axial bolt (8) is mounted for longitudinal displacement in the main body (4) and in the swivel housing (7), in that the axial bolt (8) is rotationally fixedly mounted in the swivel housing (7), and in that the axial bolt (8) carries the wedge surface (28).

2. Device according to claim 1, characterized in that the axial bolt (8) is of tube-shaped design, and in that the actuating device (23) for displacing the axial bolt (8) is accommodated in the axial bolt (8).

3. Device according to claim 1, characterized in that the cutting tool holder (35) positions the axial bolt (8) in a rotationally fixed manner in the swivel housing (7).

4. Device according to claim 1, characterized in that the axial bolt (8) contains a through-opening (29, 31) which intersects the longitudinal axis of the axial bolt (8) and emerges at diametrically opposed points of the axial bolt (8).

5. Device according to claim 4, characterized in that the through-opening (29) extends through the wedge surface (28).

6. Device according to claim 1, characterized in that the wedge surface (28) is arranged approximately in the middle of the axial bolt (8).

7. Device according to claim 1, characterized in that the plane defined by the wedge surface (28) intersects the longitudinal axis of the axial bolt (8).

8. Device according to claim 1, characterized in that the swivel housing (7) contains a bore (32) in which the cutting tool holder (35) is arranged for longitudinal displacement.

9. Device according to claim 8, characterized in that the bore (32) for the cutting tool holder (35) intersects the bore (10) for the axial bolt (8).

10. Device according to claim 4, characterized in that the cutting tool holder (35) has a shank part (45) which extends through the through-opening (29, 31) of the axial bolt (8) and is provided on the end adjacent to the wedge surface (28) of the axial bolt (8) with a shoulder surface (51, 52) which is complementary with the wedge surface (28) of the axial bolt (8).

11. Device according to claim 10, characterized in that the shank part (45) is flat-edged in the cross-section at right angles to the longitudinal axis of the cutting tool holder (35), and in that the through-opening (29,31) in the axial bolt (8) is an elongate hole, the longer dimensions of which lie parallel to the longitudinal axis of the axial bolt (8) and the transverse extent of which is identical with the thickness of the flat edge.

12. Device according to claim 10, characterized in that the length of the shank part (45), measured in the longitudinal direction of the cutting tool holder (35), is less than the outer diameter of the axial bolt (8).

13. Device according to claim 10, characterized in that the shank part (45) of the cutting tool holder (35) carries at its end remote from the cutting tool (36) a pin (53) which does not protrude beyond the cross-section of the shank part (45) and is guided in a corresponding opening (34) of the swivel housing (7) on the side of the axial bolt (8) opposite the cutting tool (36).

14. Device according to claim 13, characterized in that the pin (53) is a cylindrical pin and the associated opening (34) in the swivel housing (7) is a cylindrical bore.

15. Device according to claim 10, characterized in that the cutting tool holder (35) has in the region between the shoulder (51, 52) cooperating with the wedge surface (28) and the cutting tool (36) a cylindrical section (41), the cross-section of which transversely to the longitudinal axis of the cutting tool holder (35) is equal to or greater than the shank part (45).

16. Device according to claim 15, characterized in that the cylindrical section (41) passes at its end remote from the shank part (45) into a collar (37) of further enlarged cross-section.

17. Device according to claim 15, characterized in that the cylindrical section (41) of the cutting tool holder (35) carries an abutment (43) for a compression spring (44) which is supported at the other end on the swivel housing (7) and prestresses the cutting tool holder (35) in the direction of the wedge surface (28) of the axial bolt (8).

18. Device according to claim 17, characterized in that the compression spring is a helical spring (44).

19. Device according to claim 17, characterized in that a lid (54) attached to the swivel housing (7) and having an opening (56) for passage of the cutting tool holder (35) through it is provided for supporting the compression spring (44) in the swivel housing (7), and in that the cutting tool holder (35) is guided in the radial direction in the opening (56) of the lid (54).

20. Device according to claim 2, characterized in that the tube-shaped axial bolt (8) is closed at one end, and the actuating device includes a compression spring (58) and an actuating screw (23), in that the compression spring (58) is arranged between the closed end of the axial bolt (8) and the cutting tool holder (35), and in that the pressure screw (23) is screwed into an internal thread (22) on the axial bolt (8) at the end opposite the spring (58) which is supported on the cutting tool holder (35) in such a way that when the screw (23) is screwed in, the cutting tool holder (35) is displaced radially relative to the axial bolt (8) in the direction of the cutting tool (36).

21. Device according to claim 1, characterized in that the cutting tool (36) lies with its effective cutter on a plane which contains the longitudinal axis of the cutting tool holder (35).

## Revendications

1. Dispositif (1) pour aléser des surfaces intérieures sphériques de pièces, comportant un élément de base (4) qui présente un axe de rotation (3), un corps oscillant (7) monté avec possibilité de pivotement dans l'élément de base (4), un axe (8) qui est monté dans l'élément de base (4), dont l'axe longitudinal est perpendiculaire à l'axe de rotation (3) et qui traverse le corps oscillant (7) aux fins de supporter celui-ci (7) lequel corps oscillant peut pivoter sous l'action d'une tringlerie (11, 15) disposée à l'intérieur de l'élément de base (4), un porte-outil de coupe (35) qui est porté par le corps oscillant (7), peut être déplacé radialement par rapport à l'axe (8) et est soumis à une précontrainte en direction de l'axe (8) par des moyens élastiques, et un élément qui peut se déplacer suivant l'axe longitudinal de l'axe (8), comporte une surface (28) en coin et coopère avec le porte-outil de coupe (35), au moyen duquel le porte-outil de coupe (35) peut être déplacé radialement par rapport à l'axe (8) à l'encontre de la précontrainte élastique, ainsi qu'un dispositif d'actionnement (23) pour déplacer l'élément portant la surface en coin (28) à l'encontre de l'action d'un dispositif (58) d'application de précontrainte associé audit élément, caractérisé par le fait que l'axe (8) est monté mobile en translation dans l'élément de base (4) et dans le corps oscillant (7), par le fait que l'axe (8) est monté fixe en rotation dans le corps oscillant (7) et par le fait que l'axe (8) porte la surface en coin (28).

2. Dispositif selon la revendication 1, caractérisé par le fait que l'axe (8) est tubulaire et par le fait que le dispositif d'actionnement (23) pour déplacer l'axe (8) est logé dans ledit axe (8).

3. Dispositif selon la revendication 1, caractérisé par le fait que le porte-outil de coupe (35) immobilise l'axe (8) en rotation à l'intérieur du corps oscillant (7).

4. Dispositif selon la revendication 1, caractérisé par le fait que l'axe (8) comporte un passage (29, 31) qui coupe l'axe longitudinal de l'axe (8) et débouche en des points diamétralement opposés de l'axe (8).

5. Dispositif selon la revendication 4, caractérisé par le fait que le passage (29) traverse la surface en coin (28).

6. Dispositif selon la revendication 1, caractérisé par le fait que le surface en coin (28) est disposées sensiblement au milieu sur l'axe (8).

7. Dispositif selon la revendication 1, caractérisé par le fait que le plan défini par la surface en coin (28) coupe l'axe longitudinal de l'axe (8).

8. Dispositif selon la revendication 1, caractérisé par le fait que le corps oscillant (7) comporte un perçage (32) dans lequel le porte-outil de coupe (35) est monté avec possibilité de déplacement en translation.

9. Dispositif selon la revendication 8, caractérisé par le fait que le perçage (32) recevant le porte-outil de coupe (35) coupe le perçage (10) pour l'axe (8).

10. Dispositif selon la revendication 4, caractérisé par le fait que le porte-outil de coupe (35) présente une partie de queue (45) qui pénètre dans le passage (29, 31) de l'axe (8) et qui, à son extrémité voisine de la surface en coin (28) de l'axe (8), est pourvue d'une surface épaulée (51, 52) complémentaire de la surface en coin (28) de l'axe (8).

11. Dispositif selon la revendication 10, caractérisé par le fait que, en section transversale perpendiculairement à l'axe longitudinal du porte-outil de coupe (35), la partie de queue (45) présente des plats et par le fait que le passage (29, 31) dans l'axe (8) est un trou oblong dont la plus grande dimension est parallèle à l'axe longitudinal de l'axe (8) et dont la largeur est égale à l'épaisseur de la partie plate.

12. Dispositif selon la revendication 10, caractérisé par le fait que la longueur de la partie de queue (45), mesurée dans la direction longitudinale du porte-outil de coupe (35) est inférieure au diamètre extérieur de l'axe (8).

13. Dispositif selon la revendication 10, caractérisé par le fait que la partie de queue (45) du porte-outil de coupe (35) à son extrémité éloignée de l'outil de coupe (36), porte un têton (53) qui de dépasse pas au-delà de la section de la partie de queue (45) et est guidé dans une ouverture (34) associée du corps oscillant (7) du côté de l'axe (8) opposé à l'outil de coupe (36).

14. Dispositif selon la revendication 13, caractérisé par le fait que le têton (53) est cylindrique et que l'ouverture (34) associée dans le corps oscillant (7) est un perçage cylindrique.

15. Dispositif selon la revendication 10, caractérisé par le fait que le porte-outil de coupe (35) dans la zone comprise entre l'épaulement qui coopère avec la surface en coin (28) et l'outil de coupe (36), comporte une partie (41) cylindrique dont la section mesurée transversalement à l'axe longitudinal du porte-outil de coupe (35) est égale ou supérieure à la section de la partie de queue (45).

16. Dispositif selon la revendication 15, caractérisé par le fait que, à son extrémité éloignée de la partie de queue (45) , la partie (41) cylindrique se raccorde à un collet (37) à section augmentée.

17. Dispositif selon la revendication 15, caractérisé par le fait que la partie (41) cylindrique du porte-outil de coupe (35) porte une butée (43) pour un ressort de compression (44) qui prend appui par son autre extrémité sur le corps oscillant (7) et applique une précontrainte sur le porte-outil de coupe (35) en direction de la surface en coin (28) de l'axe (8).

18. Dispositif selon la revendication 17, caractérisé par le fait que le ressort de compression est un ressort hélicoïdal (44).

19. Dispositif selon la revendication 17, caractérisé par le fait que comme appui pour le ressort de compression (44) il est prévu à l'intérieur du corps oscillant (7) un couvercle (54) qui est fixé sur le corps oscillant (7) et comporte une ouverture (56) pour le passage du porte-outil de coupe (35) et par le fait que le porte-outil de coupe (35) est guidé radialement dans l'ouverture (56) du couvercle.

20. Dispositif selon la revendication 2, caractérisé par le fait que l'axe (8) tubulaire est fermé à une extrémité et que le dispositif d'actionnement comprend un ressort de compression (58) et une vis d'actionnement (23), par le fait que le ressort de compression (58) est placé entre l'extrémité fermée de l'axe (8) et le porte-outil de coupe (35) et par le fait que la vis de pression (23) est vissée dans un taraudage (22) de l'axe (8) à l'extrémité opposée au ressort (58) et prend appui sur le corps oscillant (7) de telle sorte que lors du serrage de la vis (23), le porte-outil de coupe (35) soit déplacé radialement en direction de l'outil de coupe (36) par rapport à l'axe (8).

21. Dispositif selon la revendication 1, caractérisé par le fait que l'outil de coupe (36) par son arête active est situé dans un plan qui contient l'axe longitudinal du porte-outil de coupe (35).
